# DEMANDE DE BREVET EUROPEEN

(11) **EP 3 795 369 A1**
(43) Date de publication de la demande: **24.03.2021**
(21) Numéro de dépôt: 20197569.5
(22) Date de dépôt: 22.09.2020
(51) Int. Cl.: B60B 3/16, B60B 27/00, F16D 65/12

(54) **MOYEU DESTINÉ À ÊTRE MONTÉ EN ROTATION AUTOUR D'UN AXE PAR RAPPORT À UN ORGANE FIXE**

(30) Priorité: 23.09.2019 FR 1910468
(71) Demandeur: NTN-SNR ROULEMENTS, 74000 Annecy (FR)
(72) Inventeur: MARTINEZ, Solène, 73100 Gresy sur Aix (FR); POURROY-SOLARI, Vincent, 74230 Thones (FR); MINEUR, Axel, 74010 Annecy Cedex (FR)
(74) Mandataire: Sayettat, Julien Christian

(57) **Abrégé**

L'invention concerne un moyeu (3) destiné à être monté en rotation autour d'un axe par rapport à un organe fixe, ledit moyeu présentant une bride (8) de fixation d'une jante (1) de roue de véhicule automobile et d'un disque de frein (2), ladite bride étant formée d'une pluralité de pattes (10) présentant chacune une interface de fixation de la jante (1) et une interface de fixation du disque de frein (2) définissant respectivement un diamètre de fixation de la jante (1) et un diamètre de fixation du disque de frein (2), ledit diamètre de fixation du disque de frein (2) étant supérieur audit diamètre de fixation de la jante (1), la bride de fixation (8) étant équipée d'un dispositif d'obturation s'étendant radialement pour venir fermer axialement les évidements (11) traversant ladite bride entre les pattes (10).

## Description

L'invention concerne un moyeu destiné à être monté en rotation autour d'un axe par rapport à un organe fixe, ainsi qu'un montage comprenant une jante de roue de véhicule automobile et un disque de frein montés sur un système de guidage en rotation comprenant un tel moyeu.

Le moyeu est destiné à être monté en rotation par rapport à un organe fixe par l'intermédiaire d'au moins une rangée de corps roulants, ledit moyeu étant pourvu de moyens d'association de l'ensemble jante / disque et l'organe fixe étant pourvu de moyens d'association à un élément de suspension du véhicule.

Selon une réalisation, le moyeu présente un fût depuis lequel s'étend radialement une bride pourvue d'interfaces de fixation de la jante et du disque de frein, par exemple sous la forme d'orifices de fixation par vissage, ladite bride étant agencée pour transmettre les efforts de roulage et supporter les efforts de freinage, notamment relativement à la transmission à la jante des efforts de freinage exercés par le disque.

Pour réduire la masse tout en résistant à ces efforts, le document WO2018134384 propose une bride de fixation formée d'une pluralité de pattes qui sont espacées angulairement par des évidements, lesdites pattes présentant chacune un orifice de fixation de la jante et un orifice de fixation du disque de frein au moyen de vis permettant d'exercer un effort de serrage axial de respectivement la jante et le disque sur les pattes.

En outre, les pattes peuvent intégrer la géométrie d'un manchon de fixation du disque de frein, notamment en décalant radialement et axialement les orifices de fixation du disque par rapport aux orifices de fixation de la jante. Cette réalisation permet notamment l'utilisation d'un disque présentant une géométrie de couronne afin de diminuer le poids du montage mais également de limiter le bruit et d'améliorer la robustesse ainsi que la compacité axiale de la liaison moyeu / disque.

Toutefois, un tel montage conduit à laisser des espaces traversant la bride entre les pattes au niveau des évidements, ce qui compromet l'étanchéité du montage du côté externe du véhicule, des polluants extérieurs tels que de l'eau et/ou de la boue pouvant en particulier pénétrer dans ledit montage et y causer des dommages notamment dus à la corrosion.

En outre, l'air provenant du côté interne du montage peut s'échapper librement par les évidements, et ne peut donc pas être utilisé pour le refroidissement du disque de frein.

L'invention vise à perfectionner l'art antérieur en proposant notamment un moyeu présentant des pattes de fixation d'une jante de roue de véhicule automobile et d'un disque de frein, ledit moyeu présentant un bon compromis entre une réduction de son poids et la protection contre les entrées de polluants extérieurs et/ou les fuites d'air.

A cet effet, selon un premier aspect, l'invention propose un moyeu destiné à être monté en rotation autour d'un axe par rapport à un organe fixe, ledit moyeu présentant un fût depuis lequel s'étend radialement une bride de fixation d'une jante de roue de véhicule automobile et d'un disque de frein, ladite bride étant formée d'une pluralité de pattes qui sont espacées angulairement par des évidements, lesdites pattes présentant chacune une interface de fixation de la jante et une interface de fixation du disque de frein définissant respectivement un diamètre de fixation de la jante et un diamètre de fixation du disque de frein autour de l'axe de rotation, ledit diamètre de fixation du disque de frein étant supérieur audit diamètre de fixation de la jante, la bride de fixation étant équipée d'un dispositif d'obturation s'étendant radialement pour venir fermer axialement les évidements traversant ladite bride entre les pattes.

Selon un deuxième aspect, l'invention propose un montage comprenant une jante de roue de véhicule automobile et un disque de frein fixés sur la bride d'un tel moyeu, le dispositif d'obturation fermant chacun des évidements disposés entre les pattes et le disque.

D'autres objets et avantages de l'invention apparaîtront dans la description qui suit, faite en référence aux figures annexées, dans lesquelles :
[Fig.1] est une représentation en perspective en vue interne d'un moyeu selon un mode de réalisation de l'invention ;
[Fig.2] est une représentation en perspective en vue interne d'une jante de roue de véhicule automobile destinée à être fixée à la bride du moyeu de la figure 1 ; [Fig.3a] et
[Fig.3b] sont des représentations en perspective d'un montage comprenant un disque de frein et la jante de la figure 2 fixés au moyeu de la figure 1, respectivement en perspective en vue interne (figure 3a) et en vue de côté (figure 3b) ;
[Fig.4] et
[Fig.5] sont des représentations respectivement en perspective interne et en vue externe du montage des figures précédentes, le disque de frein et la jante ayant été respectivement occultés sur les figures 4 et 5 ;
[Fig.6] est une représentation en coupe longitudinale du montage des figures 3a et 3b ;
[Fig.7] est une représentation en perspective d'un module d'obturation des figures précédentes.

En relation avec ces figures, on décrit ci-dessous un montage comprenant une jante 1 de roue de véhicule automobile et un disque de frein 2 montés sur un système de guidage en rotation de l'ensemble jante 1 / disque 2.

Le système comprend un moyeu 3 destiné à être monté en rotation autour d'un axe X par rapport à un organe fixe par l'intermédiaire d'au moins une rangée de corps roulants. Dans la description, les termes « extérieur » et « intérieur » sont définis par rapport à l'axe X d'entrainement en rotation, respectivement pour une localisation éloignée et proche dudit axe.

Le moyeu 3 présente un fût 4 qui comprend une paroi extérieure 4a sur laquelle peut être disposée au moins une piste de roulement pour former, avec une piste de roulement portée par l'organe fixe, un chemin pour une rangée de corps roulants. En particulier, une telle piste de roulement peut être formée directement sur la paroi extérieure 4a, ou sur une bague qui est rapportée sur ladite paroi extérieure, puis immobilisée axialement du côté interne par une collerette 5 qui peut être réalisée par sertissage.

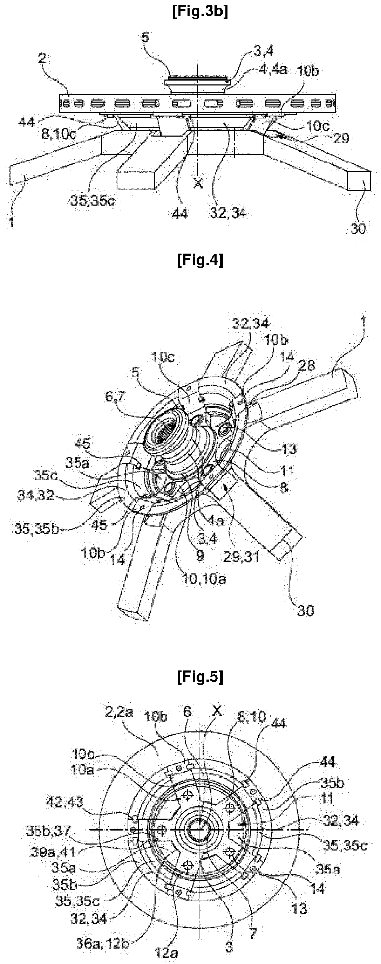

Dans la description, les termes « externe » et « interne » sont définis par rapport à l'intérieur du véhicule automobile pour désigner une position respectivement éloignée et proche dudit intérieur, et notamment respectivement en bas et en haut de la figure 3b. Par ailleurs, les termes « radial » et « axial » sont définis par rapport à l'axe X d'entrainement en rotation, respectivement perpendiculairement et suivant cet axe.

Pour permettre l'entraînement en rotation de la roue, notamment dans le cas d'une roue motrice, le système peut comprendre un bol de transmission d'un couple moteur au moyeu, ledit bol étant actionné en rotation par le moteur du véhicule et comprenant notamment un joint homocinétique (CVJ) par exemple de type Rzeppa.

Pour assurer la transmission du couple de rotation entre le bol et le moyeu 3, le système représenté comprend des moyens d'engrènement 7 qui sont formés réciproquement dans un alésage 6 du fût 4 et sur un embout du bol. En particulier, l'embout et l'alésage 6 peuvent présenter une géométrie cylindrique complémentaire, les moyens d'engrènement comprenant deux ensembles 7 de cannelures axiales formés respectivement dans ledit alésage et sur ledit embout pour être engagés l'un dans l'autre lorsque ledit embout est monté dans ledit alésage.

Le moyeu 3 présente en outre une bride 8 de fixation de la jante 1 et du disque de frein 2, ladite bride s'étendant radialement depuis le fût 4. En particulier, la bride de fixation 8 s'étend depuis une zone périphérique externe 9 du fût 4.

La bride 8 est formée d'une pluralité de pattes 10 qui sont espacées angulairement par des évidements 11. En particulier, le fait de prévoir une bride 8 avec une structure circonférentielle discontinue permet de réduire de façon importante le poids du moyeu 3, et donc le poids total du montage.

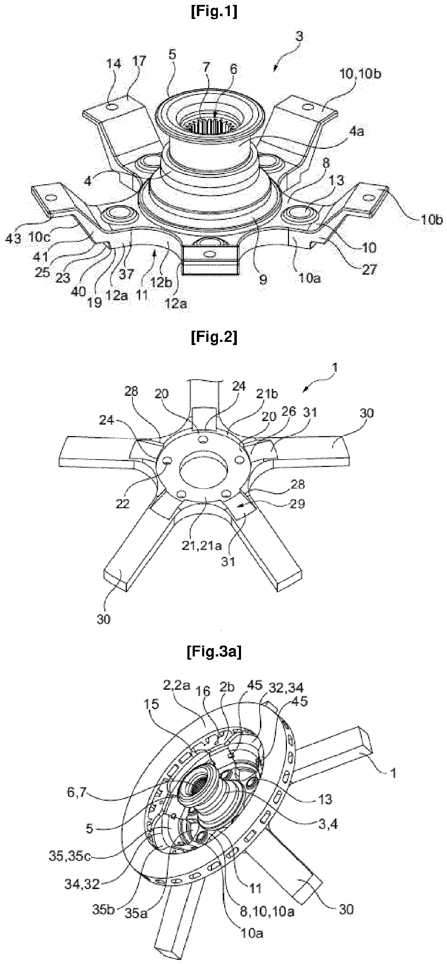

En relation avec la figure 1, chaque patte 10 présente deux parois latérales 12a qui sont chacune raccordées à une paroi latérale 12a d'une patte 10 adjacente par une paroi concave radiale 12b formée sur la bride 8, ladite paroi concave délimitant avec lesdites parois latérales les évidements 11 entre lesdites pattes adjacentes. Dans le mode de réalisation représenté, la bride 8 présente cinq pattes de fixation 10 qui sont équiréparties angulairement autour de l'axe de rotation X.

Pour permettre la fixation de la jante 1 et du disque 2 sur la bride 8, les pattes 10 présentent chacune une interface pour la fixation de ladite jante et une interface pour la fixation dudit disque. Dans le mode de réalisation représenté, chacune des interfaces comprend un orifice 13, 14 de fixation dans lesquels des vis, des goujons ou des ensembles écrous / tiges filetées (non représentés) sont destinés à venir s'engager pour fixer respectivement la jante 1 et le disque de frein 2 par serrage axial sur les pattes 10.

Les interfaces de fixation de la jante 1 et du disque de frein 2 définissent respectivement un diamètre Dⱼ de fixation de la jante 1 et un diamètre D_{d} de fixation du disque de frein 2 autour de l'axe X, le diamètre D_{d} de fixation du disque de frein 2 étant supérieur au diamètre Dⱼ de fixation de la jante 1. Dans le mode de réalisation représenté, les orifices 13, 14 de fixation sont centrés sur les diamètres respectifs.

En particulier, chacune des pattes 10 présente, par rapport au fût 4, une partie proximale 10a sur laquelle est formé une interface comprenant un orifice 13 de fixation de la jante 1 et une partie distale 10b sur laquelle est formé une interface comprenant un orifice 14 de fixation du disque de frein 2, les parties 10a, 10b étant reliées par une partie de raccordement 10c qui est agencée pour décaler axialement et radialement lesdites parties proximale et distale l'une par rapport à l'autre. De façon avantageuse, la partie de raccordement 10c est inclinée par rapport à la direction axiale en présentant deux extrémités coudées de raccordement avec respectivement une partie proximale 10a et une partie distale 10b s'étendant radialement.

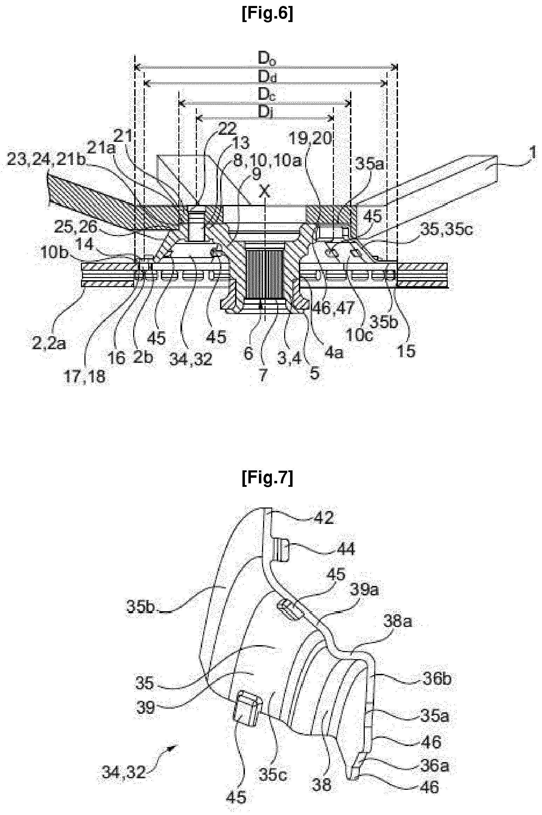

En relation avec les figures 3a et 6, le disque de frein 2 comprend une couronne de friction 2a présentant un bord intérieur 15 depuis lequel s'étendent des lobes 2b pourvus chacun d'un orifice 16 de fixation, les lobes étant formés dans la continuité radiale du bord intérieur 15. Un tel agencement du disque de frein 2 et du moyeu 3 permet de limiter les bruits issus de leur fixation. D'autres modes de fixation du disque de frein 2 sur l'interface des pattes 10 sont possibles, par exemple en emprisonnant l'extrémité desdites pattes dans des encoches dudit disque, encoches refermées par une plaque ou une couronne fixée par des vis dans ledit disque. Ce type de montage permet de réduire les déformations des pattes 10 liées à la dilatation.

Pour assurer le montage du disque de frein 2 sur le moyeu 3, chaque lobe 2b est disposé en appui axial sur respectivement une partie distale 10b d'une patte 10 en alignant axialement leurs orifices 14, 16 de fixation respectifs. Ensuite, une vis est engagée dans chaque ensemble d'orifices 14.

En relation avec le mode de réalisation représenté, les parois distales 10b présentent chacune une paroi radiale interne 17 sur laquelle une paroi complémentaire 18 du disque de frein 2 est destinée à venir en appui axial, lesdites parois complémentaires étant formées chacune sur une paroi radiale externe d'un lobe 2b. En particulier, les parois radiales 17, 18 s'étendent chacune autour de l'orifice de fixation 14, 16 de respectivement une partie distale 10b et un lobe 2b.

Les parois radiales internes 17 sont disposées autour du fût 4, ce qui permet de réduire l'encombrement axial nécessaire aux fonctions d'engrènement du moyeu 3 et de fixation du disque de frein 2, et donc l'encombrement axial global du montage.

Pour permettre la fixation de la jante 1 sur le moyeu 3, les parties proximales 10a présentent chacune une paroi radiale externe 19 sur laquelle une paroi complémentaire 20 de ladite jante est destinée à venir en appui axial. De façon avantageuse, le fait que le disque de frein 2 soit fixé sur des parois 17 qui sont distinctes des parois 19 de fixation de la jante 1 permet de diminuer les exigences de battement sur les parois 19, et donc d'en faciliter leur réalisation.

En relation avec les figures 2 et 6, la jante 1 présente un plateau central 21 dans lequel des orifices 22 de fixation au moyeu 1 sont formés, ledit plateau présentant une paroi annulaire radiale 21a sur laquelle les parois complémentaires 20 sont formées en entourant chacune respectivement un orifice 22.

De façon avantageuse, les parois radiales externes 19 du moyeu 3 sont disposées en saillie externe du fût 4, ce qui permet de faciliter la fixation sur elles de la jante 1. Pour ce faire, chacune des parties proximales 10a est raccordée au fût 4 de sorte à être décalée du côté externe dudit fût 4, notamment grâce à un agencement particulier de la zone périphérique externe 9 depuis laquelle s'étend la bride 8.

Chacune des pattes 10 présente une paroi 23 définissant entre elles un diamètre D_{c} autour de l'axe de rotation X, la jante 1 présentant des parois complémentaires 24 qui sont montées sur lesdites parois pour assurer le centrage de ladite jante suivant le diamètre D_{c}. En particulier, le centrage est ainsi réalisé de façon discontinue, ce qui est favorable au gain de masse, et par un agencement des pattes 10 qui ne nécessite pas de matière supplémentaire.

De façon avantageuse, le diamètre D_{c} de centrage de la jante 1 est compris entre le diamètre D_{d} de fixation du disque de frein 2 et le diamètre Dj de fixation de la jante 1, ce qui permet de bénéficier d'un diamètre de centrage augmenté.

Dans le mode de réalisation représenté, les parois de centrage 23 sont formées au niveau des parties de raccordement 10c. En particulier, chaque paroi de centrage 23 d'une patte 10 est formée au niveau de l'extrémité externe d'une partie de raccordement 10c, de manière à être disposée dans le prolongement extérieur de la paroi radiale externe 19. Ainsi, on rapproche axialement et radialement les fonctions de fixation et de centrage de la jante 1, ce qui permet de limiter l'encombrement global du montage.

Les pattes 10 présentent chacune un épaulement formé d'une paroi radiale 25 et d'une paroi axiale 23 de centrage, la jante 1 présentant un épaulement complémentaire dont la paroi radiale 26 est en regard axial de la paroi radiale 25 de ladite patte et dont la paroi axiale 24 est centrée sur la paroi axiale 23 de ladite patte.

Dans le mode de réalisation représenté, la périphérie du plateau central 21 est équipée d'un rebord annulaire 21b qui s'étend axialement, et sur lequel sont formées les parois complémentaires 24 de centrage.

Pour limiter les risques de déplacement relatif entre la jante 1 et le moyeu 3 durant la rotation, notamment durant les phases de freinage, et donc les risques d'endommagement du montage, notamment au niveau des vis de fixation de ladite jante, les pattes 10 présentent en outre des parois latérales 27 qui sont en regard circonférentiel avec respectivement des parois complémentaires 28 de la jante 1 de sorte à pouvoir immobiliser en rotation ladite jante sur lesdites pattes, notamment en prévoyant un jeu circonférentiel juste suffisant à la disposition de la jante 1 sur les pattes 10.

Dans le mode de réalisation représenté, les parois latérales 27 sont formées au niveau des parties de raccordement 10c, et notamment sur les extrémités intérieures desdits parties. En particulier, les fonctions de centrage et d'immobilisation en rotation de la jante 1 sont ainsi réalisées sensiblement au même endroit, ce qui permet non seulement de simplifier la réalisation du montage, mais également de réduire l'encombrement global dudit montage. Toutefois, les perfectionnements de ces deux fonctions qui sont décrits ci-dessus peuvent être utilisés indépendamment l'un de l'autre

Pour permettre son immobilisation en rotation sur le moyeu 3, la jante 1 présente au moins un logement 29 dans lequel une patte 10 est disposée, les parois complémentaires 28 bordant latéralement ledit logement. Dans le mode de réalisation représenté, un logement 29 est prévu pour chacune des pattes 10.

En relation avec les figures, la périphérie du plateau central 21 est prolongée radialement par des branches 30 de la jante 1, un logement 29 étant formé sur respectivement chacune desdites branches.

En particulier, chaque logement 29 débouche intérieurement dans le rebord annulaire 21 b et comprend un fond 31 sur l'extrémité intérieure duquel est formée la paroi radiale complémentaire 26, afin de former, avec la paroi axiale 24 en regard, l'épaulement complémentaire de centrage de la jante 1.

De façon avantageuse, une branche 30 est formée dans le prolongement radial de chacun des orifices 22 du plateau central 21, de manière à disposer chaque logement 29 en regard radial de respectivement un orifice 22.

Un tel agencement permet de faciliter l'alignement des orifices 13, 22 pour la fixation de la jante 1, mais également de localiser les efforts d'immobilisation en rotation de ladite jante au niveau desdits orifices, afin de mieux protéger les vis contre les risques d'endommagement.

La bride de fixation 8 est équipée d'un dispositif d'obturation 32 s'étendant radialement pour venir fermer axialement les évidement 11 traversant ladite bride entre les pattes 10. En particulier, le dispositif d'obturation 32 ferme chacun des évidements 11 disposés entre les pattes 10 et le disque 2.

Ainsi, on empêche la pénétration par ces évidements 11 de polluants extérieurs tels que de l'eau et/ou de la boue, ce qui permet de limiter les risques de détérioration du montage par corrosion. En outre, le dispositif d'obturation 32 permet d'empêcher les fuites d'air vers l'extérieur en canalisant les flux d'air provenant de l'intérieur du véhicule vers le disque de frein 2, afin d'assurer son refroidissement.

Pour pouvoir recouvrir de façon efficace les évidements 11, le dispositif d'obturation :
- est inscrit dans un diamètre Dₒ qui est supérieur au diamètre D_{d} de fixation du disque de frein 2, notamment en étant sensiblement égal au diamètre extérieur dans lequel les pattes 10 sont inscrites ; et
- s'étend entre les parties proximales 10a, de raccordement 10c et distales 10b.

Dans le mode de réalisation représenté, le dispositif d'obturation comprend des modules séparés 34 qui sont disposés respectivement entre chacune des pattes 10 pour venir fermer axialement un évidement 11. En variante, le dispositif d'obturation 32 peut comprendre au moins un module fermant plusieurs évidements 11, par exemple un seul module s'étendant circonférentiellement sur tous les évidements 11 pour les fermer.

Chaque module 34 présente une cloison 35 en matériau étanche, ladite cloison présentant une portion intérieure 35 disposées entre les parties proximales 10a, une portion centrale 35c disposée entre les parties de raccordement 10c et une portion extérieure 35b disposée entre les parties distales 10b. Les modules 34 peuvent être obtenus par moulage d'un matériau polymère ou par emboutissage d'un matériau métallique.

Pour assurer l'obturation totale des évidements 11 traversant la bride 8 entre les pattes 10, la cloison 35 présente une périphérie qui est complémentaire de la périphérie desdits évidements.

En relation avec les figures 1, 5 et 7, la portion intérieure 35a s'étend sensiblement radialement et est disposée sur la paroi annulaire 21a du plateau central 21 lors du montage du dispositif d'obturation 32 sur l'ensemble jante 1 / moyeu 3, ladite portion intérieure présentant :
- un bord intérieur 36a convexe qui vient en regard de la paroi concave 12b ; et
- deux bords latéraux 36b de géométrie complémentaire à celle d'une portion intérieure 37 de respectivement une paroi latérale 12a.

En particulier, la portion centrale 35c comprend :
- une paroi intérieure axiale 38 qui s'étend dans le prolongement extérieur de la portion intérieure radiale 35a et est disposée sur le rebord annulaire 21b lors du montage du dispositif 32 sur l'ensemble jante 1 / moyeu 3, la paroi 38 présentant deux bords latéraux 38a de géométrie complémentaire à celle des zones 40 de paroi latérales 12a situées à proximité de la paroi axiale 23 de centrage de la jante 1 ;
- une paroi extérieure 39 qui s'étend de façon inclinée dans le prolongement extérieur de la paroi axiale 38, la paroi 39 présentant deux bords latéraux 39a de géométrie complémentaire à celle des zones 41 de paroi latérales 12a s'étendant le long des parties de raccordement 10c.

Par ailleurs, la portion extérieure 35b s'étend sensiblement radialement dans le prolongement extérieur de la paroi 39 et présente deux bords latéraux 42 de géométrie complémentaire à celle des zones 43 de parois latérales 12a s'étendant le long des parties distales 10b.

Pour pouvoir être solidarisés au moyeu 3, les modules 34 présentent des moyens 44, 45, 46 de retenue entre les pattes 10.

De façon avantageuse, ces moyens de retenue 44, 45, 46 sont formés en une seule pièce avec la cloison 35 d'obturation, ce qui permet de faciliter la fabrication du dispositif d'obturation 32. Par ailleurs, tous les modules 34 peuvent être réalisés de manière identique, ce qui facilite d'autant plus la fabrication du dispositif d'obturation 32.

Dans le mode de réalisation représenté, les modules 34 présentent des moyens de retenue, notamment sous la forme de saillies 44, 45, 46 ,qui s'étendent depuis la périphérie de la cloison 35.

Chaque modules 34 présente deux jeux de saillies 44, 45 pour la retenue sur respectivement un côté du moyeu 3, chaque jeu comprenant une saillie externe 44 et une saillie interne 45 permettant la retenue dudit module sur respectivement une face externe et une face externe de la bride 8.

Chaque jeu de saillies comprend deux saillies respectivement intérieure 45 et extérieure 44 qui permettent la retenue d'un module 34 sur une patte 10, notamment :
- une saillie intérieure interne 45, qui s'étend depuis la portion centrale 35c pour être fixé sur la partie de raccordement 10c ; et
- une saillie extérieure externe 44, qui s'étend depuis la portion extérieure 35b pour être fixé sur de retenue sur la partie distale 10b.

En particulier, la saillie intérieure 45 est orientée vers la face interne de la bride 8 pour être en appui à l'opposé de la paroi 19 de fixation de la jante 1, qui est située sur la face externe de ladite bride. De même, la saillie extérieure 44 est orientée vers la face externe de la bride 8 pour être en appui à l'opposé de la paroi 17 de fixation du disque 2, qui est située sur la face interne de ladite bride.

De façon avantageuse, chaque module 34 présente un agencement symétrique par rapport à un plan passant par l'axe X, les deux jeux de saillies 44, 45 présentant des saillies externes 44 et des saillies internes 45 analogues.

De façon avantageuse, les modules 34 présentent également deux saillies radiales 46 qui sont espacées circonférentiellement, lesdites saillies étant immobilisées axialement dans un embrèvement 47 du moyeu 3. Ainsi, les saillies 44, 45, 46 forment un appui trois points au niveau de chacune des pattes 10, ce qui fiabilise la retenue des modules 34 entre lesdites pattes.

Dans le mode de réalisation représenté, les saillies 46 s'étendent radialement depuis la portion intérieure 35a, l'embrèvement 47 bordant la bride 8 au niveau de la zone périphérique externe 9 du fût 4.

## Revendications

1. Moyeu (3) destiné à être monté en rotation autour d'un axe (X) par rapport à un organe fixe, ledit moyeu présentant un fût (4) depuis lequel s'étend radialement une bride (8) de fixation d'une jante (1) de roue de véhicule automobile et d'un disque de frein (2), ladite bride étant formée d'une pluralité de pattes (10) qui sont espacées angulairement par des évidements (11), lesdites pattes présentant chacune une interface de fixation de la jante (1) et une interface de fixation du disque de frein (2) définissant respectivement un diamètre (Dj) de fixation de la jante (1) et un diamètre (D_{d}) de fixation du disque de frein (2) autour de l'axe de rotation (X), ledit diamètre de fixation du disque de frein (2) étant supérieur audit diamètre de fixation de la jante (1), ledit moyeu étant **caractérisé en ce que** la bride de fixation (8) est équipée d'un dispositif d'obturation (32) s'étendant radialement pour venir fermer axialement les évidements (11) traversant ladite bride entre les pattes (10).

2. Moyeu (3) selon la revendication 1, **caractérisé en ce que** le dispositif d'obturation (32) est inscrit dans un diamètre (Dₒ) qui est supérieur au diamètre (D_{d}) de fixation du disque de frein (2), notamment en étant sensiblement égal au diamètre extérieur dans lequel les pattes (10) sont inscrites.

3. Moyeu (3) selon l'une des revendications 1 ou 2, **caractérisé en ce que** le dispositif d'obturation (32) comprend des modules séparés (34) qui sont disposés respectivement entre chacune des pattes (10) pour venir fermer axialement un évidement (11).

4. Moyeu (3) selon la revendication 3, **caractérisé en ce que** chaque module (34) présente une cloison (35) en matériau étanche dont la périphérie (36a, 36b, 38a, 39a, 42) est complémentaire de la périphérie (12b, 37, 40, 41, 43) des évidements (11).

5. Moyeu (3) selon les revendication 3 ou 4, **caractérisé en ce que** les modules (34) présentent des moyens (44, 45, 46) de retenue entre les pattes (10).

6. Moyeu (3) selon les revendications 4 et 5, **caractérisé en ce que** les moyens de retenue (44, 45, 46) s'étendent en saillie depuis la périphérie (36a, 36b, 38a, 39a, 42) de la cloison (35).

7. Moyeu (3) selon l'une des revendications 5 ou 6, **caractérisé en ce que** les modules (34) présentent des saillies (44, 45) de retenue entre les pattes (10).

8. Moyeu (3) selon la revendication 7, **caractérisé en ce que** les modules (34) présentent au moins deux jeux de saillies (44, 45) pour la retenue sur respectivement un côté, ledit jeu comprenant une saillie externe (44) et une saillie interne (45) permettant la retenue du module (34) sur respectivement une face externe et une face interne de la bride (8).

9. Moyeu (3) selon l'une des revendications 7 ou 8, **caractérisé en ce que** les modules (34) présentent deux jeux de saillies (44, 45) pour la retenue sur respectivement un côté, ledit jeu comprenant une saillie intérieure (45) et une saillie extérieure (44) permettant la retenue du module (34) sur une patte (10).

10. Moyeu selon l'une quelconque des revendications 5 à 9, **caractérisé en ce que** les modules (34) présentent deux saillies radiales (46) qui sont espacées circonférentiellement, lesdites saillies étant immobilisées axialement dans un embrèvement (47) du moyeu (3).

11. Moyeu (3) selon l'une quelconque des revendications 1 à 10, **caractérisé en ce que** chacune des pattes (10) présente, par rapport au fût (4), une partie proximale (10a) sur laquelle est formé l'interface de fixation de la jante (1) et une partie distale (10b) sur laquelle est formé l'interface de fixation du disque de frein (2), lesdites parties étant reliées par une partie de raccordement (10c) qui est agencée pour décaler axialement et radialement lesdites parties proximale et distale l'une par rapport à l'autre.

12. Moyeu (3) selon la revendication 11, **caractérisé en ce que** le dispositif d'obturation (32) s'étend entre les parties proximales (10a), de raccordement (10c) et distales (10b).

13. Moyeu (3) selon la revendication 12 lorsqu'elle dépend de la revendication 3, **caractérisé en ce que** les modules (34) présentent une portion intérieure (35a) disposée entre les parties proximales (10a), une portion centrale (35c) disposée entre les parties de raccordement (10c) et une portion extérieure (35b) disposée entre les parties distales (10b).

14. Moyeu (3) selon l'une quelconque des revendications 11 à 13 lorsqu'elle dépend de la revendication 9, **caractérisé en ce que** la saillie intérieure (45) s'étend depuis la portion centrale (35c) pour être fixé sur la partie de raccordement (10c), la saillie extérieure (44) s'étendant depuis la portion extérieure (35b) pour être fixé sur la partie distale (10b).

15. Montage comprenant une jante (1) de roue de véhicule automobile et un disque de frein (2) fixés sur la bride (8) d'un moyeu (3) selon l'une quelconque des revendications 1 à 14, le dispositif d'obturation (32) fermant chacun des évidements (11) disposés entre les pattes (10) et le disque (2).
